# EUROPÄISCHE PATENTANMELDUNG

(11) **EP 1 522 337 A1**
(43) Veröffentlichungstag der Anmeldung: **13.04.2005**
(21) Anmeldenummer: 03026534.2
(22) Anmeldetag: 18.11.2003
(51) Int. Cl.: B01D 1/14, B01D 3/34

(54) **Flachstromverdampfer**

(30) Priorität: 07.10.2003 DE 10346549
(71) Anmelder: Linde Aktiengesellschaft, 65189 Wiesbaden (DE)
(72) Erfinder: Blätz, Christian, 82515 Wolfratshausen (DE); Kelbch, Martin, 81679 München (DE); Moll, Anton, 82399 Raisting (DE); Spöri, Ralph, 82538 Geretsried (DE)
(74) Vertreter: Gellner, Bernd, Dr.

(57) **Zusammenfassung**

Die Erfindung betrifft ein Verfahren und eine Vorrichtung zum Verdampfen einer kryogenen Flüssigkeit. Die kryogene Flüssigkeit wird einer Packung (9, 10) zugeführt, mit einem Gasstrom in Kontakt gebracht und in direktem Wärmeaustausch mit diesem verdampft.

## Beschreibung

Die Erfindung betrifft ein Verfahren zum Verdampfen einer kryogenen Flüssigkeit, wobei die kryogene Flüssigkeit einem statischen Mischer zugeführt und in dem statischen Mischer mit einem Wärmeträger in Kontakt gebracht und in direktem Wärmeaustausch mit dem Wärmeträger verdampft wird. Femer bezieht sich die Erfindung auf eine Vorrichtung zum Verdampfen einer kryogenen Flüssigkeit in direktem Wärmeaustausch mit einem gasförmigen Fluid umfassend eine Gasleitung für das gasförmige Fluid und eine in die Gasleitung mündende Flüssigleitung für die kryogene Flüssigkeit.

Im Hauptkondensator einer Tieftemperaturluftzerlegungsanlage wird flüssiger Sauerstoff in indirektem Wärmeaustausch mit gasförmigem Stickstoff verdampft. In der Einsatzluft vorhandene Kohlenwasserstoffe können sich im Sauerstoffbad des Hauptkondensators anreichern und zu Explosionsgefahr führen.

Aus sicherheitstechnischen Gründen muss daher ständig flüssiger Sauerstoff aus dem Hauptkondensator abgezogen werden. In vielen Fällen wird der abgezogene Sauerstoff mit Flossenrohrverdampfem und Lechnerdüse oder einer Verdampfergrube an die Umgebung abgegeben. Dabei wird aber die Flüssigkeitsmenge ohne Nutzen verworfen, anstatt sie als Produkt zu verwerten. Die Verdüsung des Flüssigsauerstoffs ist auch aus Sicherheitsaspekten problematisch und kann ferner zu hohen Schallemissionen führen.

Eine Möglichkeit, den abgezogenen Flüssigsauerstoff zu nutzen, besteht darin, diesen in einen warmen Sauerstoff-Gasstrom einzuleiten und in direktem Wärmeaustausch mit dem gasförmigen Sauerstoff zu verdampfen. Bei den üblichen Abmessungen der Sauerstoff-Leitungen einer Luftzerlegungsanlage ist jedoch häufig die zu verdampfende Flüssigkeitsmenge im Verhältnis zu der durch die Sauerstoff-Leitung strömenden Gasmenge zu groß, um eine effektive Verdampfung auf einer kurzen Strecke zu erreichen.

Auch Totalverdampfer mit innenliegender Düse sind zur Verdampfung des flüssigen Sauerstoffs nicht geeignet, da hierfür der flüssige Sauerstoff mit einem Überdruck von etwa 1 bar vorliegen müsste.

Die Eindüsung flüssigen Sauerstoffs in einen gasförmigen Sauerstoff-Produktstrom scheitert an dem geringen Überdruck von nur 0,2 bar, den der flüssige Sauerstoff im Vergleich zu dem Sauerstoff-Gasstrom aufweist. Der Differenzdruck könnte theoretisch durch Einleitung in ein Venturirohr angehoben werden. Die Geschwindigkeit des Sauerstoff darf jedoch auf maximal 25 m/s erhöht werden, so dass sich auf diese Weise keine nennenswerte Erhöhung des Differenzdruckes erreichen lässt.

Aufgabe vorliegender Erfindung ist es daher, ein Verfahren sowie eine geeignete Vorrichtung aufzuzeigen, die es erlauben, eine kryogene Flüssigkeit in direktem Wärmeaustausch mit einem Gasstrom zu verdampfen.

Diese Aufgabe wird durch ein Verfahren der eingangs genannten Art gelöst, bei dem eine Packung als statischer Mischer eingesetzt wird. Eine erfindungsgemäße Vorrichtung der eingangs genannten Art zeichnet sich dadurch aus, dass in der Gasleitung stromabwärts der Einmündung der Flüssigleitung eine Packung angeordnet ist.

Erfindungsgemäß wird die zu verdampfende Flüssigkeit einer Packung zugeführt und als dünner Film auf der Packungsoberfläche verteilt. Aufgrund der geringen Dicke des Flüssigkeitsfilms wird beim Kontakt mit einem Wärmeträger, insbesondere einem warmen Gasstrom, ein hoher Verdampfungsgrad erzielt.

Vorzugsweise wird eine geordnete oder strukturierte Packung, wie sie beispielsweise zur Rektifikation in Trennkolonnen eingesetzt wird, für die erfindungsgemäße Verteilung und Verdampfung der kryogenen Flüssigkeit herangezogen, da diese einen in sich stabilen Körper bildet, der auch bei höheren Strömungsgeschwindigkeiten dem Gasstrom stand hält.

Von Vorteil kommt eine Packung zum Einsatz, die aus einer Vielzahl von parallel zueinander angeordneten, gewellten Packungsblechen besteht. Die gewellten Bleche werden so zueinander orientiert, dass sich die Wellungen benachbarter Bleche kreuzen und eine Kreuzkanalstruktur entsteht. Es ist aber im Rahmen der Erfindung auch möglich, beispielsweise ein Drahtgeflecht als Packung zu verwenden. In diesem Fall ist aber in der Regel eine längere Wechselwirkungsstrecke zwischen zu verdampfender Flüssigkeit und Gasstrom notwendig, das heißt, die Ausdehnung der Drahtgeflechtpackung in Richtung der Achse der Gasleitung wird größer gewählt werden müssen als bei einer aus gewellten Blechen aufgebauten Packung.

Insbesondere wenn die Erfindung zur Verdampfung flüssigen Sauerstoffs eingesetzt wird, hat es sich aus Sicherheitsgründen bewährt, eine aus Kupfer hergestellte Packung zu verwenden, um einen durch eventuelle Zündfunken verursachten Abbrand der Packung auszuschließen. Die Dicke der Bleche wird bevorzugt zu mindestens 0,2 mm gewählt.

Durch die erfindungsgemäße Verteilung der zu verdampfenden Flüssigkeit auf der großen Packungsoberfläche entsteht ein dünner Flüssigkeitsfilm, der leicht verdampft werden kann. Aufgrund der hohen Verdampfungsrate wird vorzugsweise eine geordnete Packung verwendet, die in Richtung der Achse der Gasleitung eine Ausdehnung zwischen 20 und 100 cm, vorzugsweise zwischen 20 und 50 cm besitzt. Diese geringen Dimensionen der Packung sind ausreichend, um die kryogene Flüssigkeit total zu verdampfen und erlauben gleichzeitig auch bei beschränkten Platzverhältnissen einen Einsatz der erfindungsgemäßen Vorrichtung.

Es hat sich als vorteilhaft erwiesen, eine geordnete Packung einzusetzen, die zwei in Richtung der Gasströmung hintereinander angeordnete Packungsschichten aufweist. Die kryogene Flüssigkeit wird zunächst der ersten Packungsschicht zugeführt und aus der ersten Packungsschicht austretende Flüssigkeit in die zweite Packungsschicht eingeleitet. Die erste Packungsschicht dient im Wesentlichen dazu, die Flüssigkeit möglichst gleichmäßig über den Querschnitt der Packung zu verteilen, so dass ein möglichst dünner Flüssigkeitsfilm auf der Packungsoberfläche entsteht. Dieser Flüssigkeitsfilm wird dann in der zweiten Packungsschicht in direktem Wärmeaustausch mit dem vorbeiströmenden Gas verdampft. Die beiden Packungsschichten werden vorzugsweise so angeordnet, dass diese direkt ohne Zwischenspalt aneinandergrenzen, um den in der ersten Packungsschicht erzeugten Flüssigkeitsfilm nicht zu zerstören, können aber auch mit einem Spalt zwischen den Lagen angeordnet werden.

Von Vorteil besteht jede Packungsschicht aus einer Vielzahl von parallel zueinander angeordneten, gewellten Packungsblechen. Hierbei hat es sich als besonders günstig erwiesen, die Bleche benachbarter Packungsschichten winklig zueinander, bevorzugt rechtwinklig zueinander anzuordnen. Die gewellten Bleche einer Packungsschicht bewirken eine Verteilung der Flüssigkeit innerhalb der jeweiligen Blechebene. Durch die gegeneinander verdrehte Anordnung zweier Packungsschichten wird die Flüssigkeit auch winklig, insbesondere senkrecht, zu dieser Ebene verteilt, so dass insgesamt eine besonders gleichmäßige Verteilung der Flüssigkeit und damit ein besonders dünner Flüssigkeitsfilm erzielt wird, der sich wiederum leicht verdampfen lässt.

Erfindungsgemäß wird die kryogene Flüssigkeit auf der Packungsoberfläche verteilt und in direktem Wärmeaustausch mit dem Gasstrom verdampft. Aus Sicherheitsgründen ist es von Vorteil, die Flüssigleitung zur Zuführung der kryogenen Flüssigkeit zu der Packung bzw. zur Gasleitung thermisch zu isolieren, bevorzugt mit einer Vakuumisolierung zu versehen. Dadurch wird eine Vorverdampfung in der Flüssigleitung verhindert, die ansonsten zu einer kritischen Anreicherung von Kohlenwasserstoffen führen könnte.

Die Zuführung der Flüssigkeit zur Packung wird weiter dadurch verbessert, dass sich die Austrittsöffnung der Flüssigkeitsleitung unmittelbar stromaufwärts der geordneten Packung befindet und bevorzugt bis in das Innere der Gasleitung hineinragt. Vor dem Eintritt der Flüssigkeit in die Packung wird der Kontakt der Flüssigkeit mit dem Gasstrom minimiert. So werden beispielsweise beim Eindüsen der Flüssigkeit in Gaswirbel entstehende Flüssigkeitsaerosole vermieden, die sich anschließend auf der Packungsoberfläche nicht oder nur schwer als dünner Film verteilen lassen.

Der Wärmeübertrag von dem Gasstrom auf die kryogene Flüssigkeit kann weiter dadurch verbessert werden, dass der Gasstrom vor dem Kontakt mit der Flüssigkeit, das heißt, vor dem Eintritt in die Packung, verwirbelt wird.

Die Erfindung eignet sich zur Einleitung und Verdampfung flüssigen Sauerstoffs in einen Strom gasförmigen Sauerstoffs. Insbesondere flüssiger Sauerstoff aus dem Hauptkondensator einer Tieftemperaturluftzerlegungsanlage kann erfindungsgemäß genutzt werden. Im Vergleich zu der direkten Eindüsung der kryogenen Flüssigkeit in einen Gasstrom kann bei dem erfindungsgemäßen Einsatz einer Packung zur Verdampfung der Flüssigkeit das Verhältnis von zu verdampfender Flüssigkeitsmenge zu mit dieser in direkten Wärmeaustausch tretender Gasmenge größer gewählt werden. So hat sich die Erfindung auch bei Mengenverhältnissen der zu verdampfenden Flüssigkeit zu der mit dieser in direkten Wärmeaustausch tretenden Gasmenge von mehr als 1 zu 20 und sogar von mehr als 1 zu 10 bewährt. Die Erfindung ist insbesondere in Fällen mit Vorteil anwendbar, bei denen eine kryogene Flüssigkeit ohne nennenswerten Differenzdruck in einen Gasstrom eingedüst und verdampft werden soll.

Die Erfindung sowie weitere Einzelheiten der Erfindung werden im Folgenden anhand von in den Zeichnungen schematisch dargestellten Ausführungsbeispielen näher erläutert. Hierbei zeigen:
- Figur 1: eine erfindungsgemäße Vorrichtung mit horizontaler Verdampfungsstrecke zur Eindüsung flüssigen Sauerstoffs in einen Sauerstoff-Gasstrom,
- Figur 2: eine alternative Ausführung mit vertikaler Verdampfungsstrecke zur Eindüsung einer kryogenen Flüssigkeit in eine gerade verlaufende Gasleitung,
- Figur 3: einen Schnitt entlang der Linie A - A in den Figuren 1 und 2 und
- Figur 4: einen Schnitt entlang der Linie B - B in den Figuren 1 und 2.

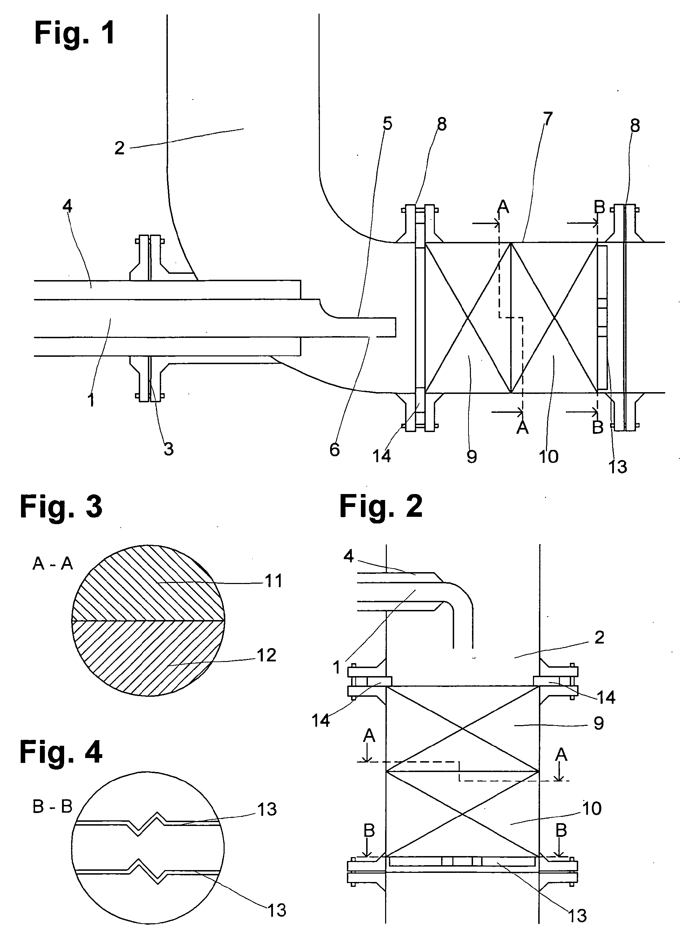

In Figur 1 ist eine erfindungsgemäße Anordnung zur Verdampfung flüssigen Sauerstoffs aus dem Hauptkondensator einer Tieftemperaturluftzerlegungsanlage gezeigt. Der tiefkalte flüssige Sauerstoff wird über die Flüssigleitung 1 in eine Gasleitung 2 eingeleitet, in der umgebungswarmer gasförmiger Sauerstoff strömt.

Die Flüssigleitung 1 ist über ein Flanschsystem 3 an der Gasleitung 2 befestigt und mit einer Vakuumisolierung 4 versehen, um ein vorzeitiges Verdampfen des flüssigen Sauerstoffs bereits in der Flüssigleitung 1 zu verhindern. Sofem die erfindungsgemäße Vorrichtung in einer thermisch isolierten Coldbox untergebracht ist, kann die separate thermische Isolierung 4 der Flüssigleitung entfallen. Die Flüssigleitung 1 ist an ihrem in die Gasleitung 2 ragenden Ende 5 nicht rohrförmig, sondern halbschalenförmig ausgebildet und besitzt an der Unterseite eine Abtropföffnung 6.

Die Flüssigleitung 1 mündet unmittelbar nach einem Bogen der Gasleitung 2 in diese ein. Nach dem Rohrbogen bilden sich Wirbel in dem durch die Gasleitung 2 strömenden Sauerstoffstrom, die Flüssigkeit aus der Halbschale 5 entreißen und so den Flüssigkeitstransport aus der Flüssigleitung 1 unterstützen.

Unmittelbar nach der Austrittsöffnung der Flüssigleitung 1 ist in die Gasleitung 2 ein Rohrstück 7 eingesetzt und mit Flanschen 8 befestigt. Das Flanschsystem 8 erleichtert die Zugänglichkeit der Packungen 9, 10 beispielsweise zu Inspektionszwecken, ist aber für eine ordnungsgemäße Funktion der Erfindung nicht zwingend erforderlich. In dem Rohrstück 7 befindet sich eine geordnete Packung mit zwei Packungsschichten 9, 10. Jede Packungsschicht 9, 10 besteht aus einer Vielzahl von gewellten Blechen 11, 12, die parallel zueinander angeordnet sind. Jedes Blech 11, 12 weist eine Wellung auf, die schräg zu den Kanten des Blechs 11, 12 orientiert ist, wobei sich die Wellungen benachbarter Bleche 11, 12 kreuzen, so dass sich eine Kreuzkanalstruktur ergibt. Die Gesamtlänge der beiden Packungsschichten in Richtung der Rohrachse beträgt 50 cm.

Die Bleche 11, 12 der beiden Packungsschichten 9, 10 sind im rechten Winkel zueinander angeordnet, um eine möglichst gleichmäßige Verteilung der Flüssigkeit über den gesamten Querschnitt der Packung 9, 10 bzw. des Rohrstücks 7 zu erzielen. In Figur 3 ist ein Schnitt entlang der Linie A - A der Figur 1 gezeigt, aus dem die rechtwinklige Anordnung der Packungsbleche 11, 12 der Packungsschichten 9, 10 deutlich wird.

Der Halt der Packungsschichten 9, 10 in der Gasleitung 2 wird durch zwei Träger 13 gewährleistet, die stromabwärts der Packungsschichten in der Gasleitung 2 befestigt sind. Die Träger 13 sind beispielsweise, wie in Figur 4 zu sehen, als gekantete Flacheisen ausgeführt. Stromaufwärts der Packungsschichten 9, 10 ist ein Einklemmring 14 vorgesehen, die zwischen die aneinander grenzenden Enden der Gasleitung 2 und des Rohrstücks 7 geklemmt ist. Die Packungsschichten 9, 10 werden stramm in das Rohrstück 7 geschoben und zwischen den Trägern 13 und den Einklemmring 14 eingeklemmt. Auf diese Weise werden axiale Schwingungen der Packungsschichten 9, 10 vermieden, die ansonsten durch die Gasströmung verursacht werden könnten.

Der aus dem Hauptkondensator der Luftzerlegungsanlage abgezogene flüssige Sauerstoff wird über die Flüssigleitung 1 in die Gasleitung 2 eingespeist. Durch die Rohrkrümmung der Gasleitung 2 werden Wirbel in dem Strom gasförmigen Sauerstoffs erzeugt, die den aus der Flüssigleitung 1 austretenden flüssigen Sauerstoff mitreißen und über den Querschnitt der Gasleitung 2 verteilen. Der flüssige Sauerstoff tritt in die erste Packungsschicht 9 ein und wird durch die schräg zur Achse des Rohrstücks 7 verlaufende Wellung über den Packungsquerschnitt verteilt und zum Teil durch direkten Wärmeaustausch mit dem vorbei strömenden Gasstrom verdampft.

Bei der Verteilung des flüssigen Sauerstoffs entsteht auf der großen Packungsoberfläche ein dünner Flüssigkeitsfilm, der nach Einleitung in die zweite Packungsschicht 10 auf deren Oberfläche totalverdampft wird.

In Figur 2 ist eine alternative Ausführungsform der Erfindung dargestellt, bei der der flüssige Sauerstoff nicht in ein gekrümmtes, sondern in ein gerades Teilstück der Gasleitung eingebracht wird. Die Ausführung gemäß Figur 2 unterscheidet sich von der nach Figur 1 im Wesentlichen nur darin, dass die Flüssigleitung 1 eine Rohrbiegung aufweist, um den flüssigen Sauerstoff in Richtung der Gasströmung in die Gasleitung 2 einzubringen. Im Übrigen entsprechen sich die beiden Ausführungen. Insbesondere sind in allen Figuren gleiche Bauteile mit den gleichen Bezugszeichen versehen.

## Patentansprüche

1. Verfahren zum Verdampfen einer kryogenen Flüssigkeit, wobei die kryogene Flüssigkeit einem statischen Mischer zugeführt und in dem statischen Mischer mit einem Wärmeträger in Kontakt gebracht und in direktem Wärmeaustausch mit dem Wärmeträger verdampft wird, **dadurch gekennzeichnet, dass** eine Packung (9, 10), insbesondere eine geordnete Packung, als statischer Mischer eingesetzt wird.

2. Verfahren nach Anspruch 1, **dadurch gekennzeichnet, dass** die kryogene Flüssigkeit mit einem Gasstrom in Kontakt gebracht.

3. Verfahren nach einem der Ansprüche 1 oder 2, **dadurch gekennzeichnet, dass** die kryogene Flüssigkeit einer ersten Packungsschicht (9) der geordneten Packung zugeführt und aus der ersten Packungsschicht (9) austretende Flüssigkeit einer zweiten Packungsschicht (10) der geordneten Packung zugeführt wird.

4. Verfahren nach einem der Ansprüche 1 bis 3, **dadurch gekennzeichnet, dass** der Gasstrom stromaufwärts der Packung (9, 10) verwirbelt wird.

5. Verfahren nach einem der Ansprüche 1 bis 4, **dadurch gekennzeichnet, dass** die kryogene Flüssigkeit auf einer Strecke (9, 10) von weniger als 1 m, bevorzugt weniger als 0,5 m total verdampft wird.

6. Verfahren nach einem der Ansprüche 1 bis 5, **dadurch gekennzeichnet, dass** flüssiger Sauerstoff mit gasförmigem Sauerstoff in Kontakt gebracht wird.

7. Verfahren nach einem der Ansprüche 1 bis 6, **dadurch gekennzeichnet, dass** das Verhältnis der Mengen der zu verdampfenden Flüssigkeit und des mit dieser in direkten Wärmeaustausch tretenden Gases größer als 1 zu 20, bevorzugt größer als 1 zu 10 ist.

8. Verfahren nach einem der Ansprüche 1 bis 7, **dadurch gekennzeichnet, dass** eine geordnete Packung (9, 10) eingesetzt wird, die eine Vielzahl von parallel zueinander angeordneten, gewellten Packungsblechen (11, 12) aufweist.

9. Vorrichtung zum Verdampfen einer kryogenen Flüssigkeit in direktem Wärmeaustausch mit einem gasförmigen Fluid umfassend eine Gasleitung für das gasförmige Fluid und eine in die Gasleitung mündende Flüssigleitung für die kryogene Flüssigkeit, **dadurch gekennzeichnet, dass** in der Gasleitung (29 stromabwärts der Einmündung der Flüssigleitung (1) eine geordnete Packung (9, 10) angeordnet ist.

10. Vorrichtung nach Anspruch 9, **dadurch gekennzeichnet, dass** die Flüssigleitung (1) thermisch isoliert, bevorzugt vakuumisoliert ist.

11. Vorrichtung nach einem der Ansprüche 9 oder 10, **dadurch gekennzeichnet, dass** sich die Austrittsöffnung der Flüssigleitung (1) unmittelbar stromaufwärts der geordneten Packung (9, 10) befindet.

12. Vorrichtung nach einem der Ansprüche 9 bis 11, **dadurch gekennzeichnet, dass** die geordnete Packung (9, 10) eine Vielzahl von parallel zueinander angeordneten, gewellten Packungsblechen (11, 12) aufweist.

13. Vorrichtung nach Anspruch 12, **dadurch gekennzeichnet, dass** die geordnete Packung zwei in Richtung der Achse der Gasleitung (2) hintereinander angeordnete Packungsschichten (9, 10) aufweist.

14. Vorrichtung nach einem der Ansprüche 9 bis 13, **dadurch gekennzeichnet, dass** die Packung (9, 10) aus Kupfer besteht.

15. Vorrichtung nach einem der Ansprüche 9 bis 14, **dadurch gekennzeichnet, dass** die geordnete Packung (9, 10) in Richtung der Achse der Gasleitung (2) eine Ausdehnung zwischen 20 und 100 cm, vorzugsweise zwischen 20 und 50 cm besitzt.
